# EUROPEAN PATENT APPLICATION

(11) **EP 1 914 551 A1**
(43) Date of publication of application: **23.04.2008**
(21) Application number: 06076900.7
(22) Date of filing: 20.10.2006
(51) Int. Cl.: G01N 33/58, A01G 7/06

(54) **Process for providing a plant with an identification label**

(71) Applicant: Nederlandse Organisatie voor Toegepast-Natuurwetenschappelijk Onderzoek TNO, 2628 VK Delft (NL)
(72) Inventor: Van Duijn, Albert, 2341 BV Oegstgeest (NL); Draaijer, Arie, 3704 BM Zeist (NL)
(74) Representative: van Loon, C.J.J.

(57) **Abstract**

The invention provides a process for providing a plant with an identification label, which process comprises cultivating the plant from seed which comprises tracer molecules, thereby allowing the tracer molecules to be incorporated in the plant, whereby the incorporated tracer molecules generate and/or form the identification label. The invention further relates to seed for cultivating plants which seed comprises tracer molecules, a process for preparing seed, and the use of tracer molecules for identifying a particular plant among one or more other type of plants.

## Description

The invention relates to a process for providing a plant with an identification label, seed for cultivating plants which seed comprises tracer molecules, a process for preparing said seed, and the use of tracer molecules for identifying a particular plant among one or more other type of plants.

It is known from WO 2004/065945 that tracer molecules can be used to identify plants and/or plant parts. The plants and/or plant parts are contacted with the tracer molecules which are either taken up inside the plant and/or plant parts or on the surface thereof. In this way, the origin, time of production or the owner of plant material can be identified. Moreover, tracking and tracing of plant material throughout the production process facilities a better quality control. Further, it allows the identification of batches of plant material that have received special treatments or have a specific property. An essential drawback of such known application is that the plants and/or plant parts to be treated with the tracer molecules need as such, of course, to be identified first before the tracer molecules can be brought into contact with the plants and/or plant parts concerned. In other words, a pre-selection of the plants needs to be carried out before the tracer molecules can actually be used. Evidently, this makes such an application a time-consuming and labour-intensive exercise.

Object of the present invention is to provide a less time-consuming and labour-intensive process which allows easy identification of plants.

Surprisingly, it has been found that this can be realised when use is made of seed that comprises tracer molecules.

Accordingly, the present invention relates to a process for providing a plant with an identification label, which process comprises cultivating the plant from seed which comprises tracer molecules, thereby allowing the tracer molecules to be incorporated in the plant, whereby the incorporated tracer molecules generate and/or form the identification label.

In the process according to the invention, the tracer molecules are preferably fluorescent tracer molecules.

Suitably, the tracer molecules are selected from the group consisting of vitamins, food grade dyes, laser dyes, textile dyes and pH indicators.

Suitable examples of vitamines include Vitamin B and Vitamin A.

Suitable examples of food grade dyes include Vitamin B Phosphate and Carotene.

Suitable examples of laser dyes include Rhodamine B and Sulfo Rhodamine G.

Suitable examples of textile dyes include Basic Red and Basic Yellow.

Suitable examples of pH indicators include Porphyrines and HPTS.

Preferably, the tracer molecules are selected from the group consisting of vitamins and food grade dyes.

The tracer molecules to be used in accordance with the present invention are preferably non-toxic and non-phytotoxic.

The seed to be applied in accordance with the invention and which comprises the tracer molecules can suitably be obtained by applying the tracer molecules onto the surface of seed particles.

Preferably, the seed which comprises the tracer molecules is obtained by adding the tracer molecules to a coating or pellet which is applied onto the seed particles.

Preferably, the coating is formed by spray-drying a solution which comprises the tracer molecules on the surface of the seed particles or the coating is formed by impregnating the seed particles with a solution which comprises the tracer molecules.

More preferably, the tracer molecules are applied onto the surface of the seed particles by means of a coating which is formed by spray-drying a solution which comprises the tracer molecules on the surface of the seed particles.

The coating to be used in accordance with the present invention can be of any type commonly used in the seed industry. Suitable examples include mixtures based on different water based non-phytotoxic polymer structures.

The pellets to be used in accordance with the present invention can be of any type commonly used in the seed industry. Suitable examples include mixtures with different clay types, fibres from wood flour or peat, fillers such as different kinds of diatomaceous earth and other inert materials with a specific character.

The spray-dry and impregnation processes to be used for applying the coating on the seed particles will be carried out under conditions well understood by the skilled person in the art.

The present invention also relates to seed for cultivating plants which seed comprises tracer molecules.

Further, the present invention provides a process or seed according to the present invention wherein the plant is selected from plant species that are individually planted in field applications. Suitable examples of such plant species include corn, sugar beet, cotton, onion and most vegetable crops.

The amount of tracer molecules should be sufficient to make plant identification possible. The actual amounts to be used will depend on seed particle size, uptake rate of the tracer molecules by the plant, and the size of the plant in question.

In case of sugar beet, corn, cotton or onion the amount of tracer molecules will suitably be in the range of from 0.1 to 10 mg per pelleted seed. Preferably, the amount of tracer molecules in respect of said plant species will be in the range of from 0.1 to 2 mg per pelleted seed.

The present invention also relates to the use of tracer molecules for identifying a particular plant among one or more other type of plants, whereby the tracer molecules, present in the plant, originate from the seed of the particular plant.

The present invention will now be illustrated by means of the following Examples.

### Examples

### Vitamin B phosphate in Onion seeds

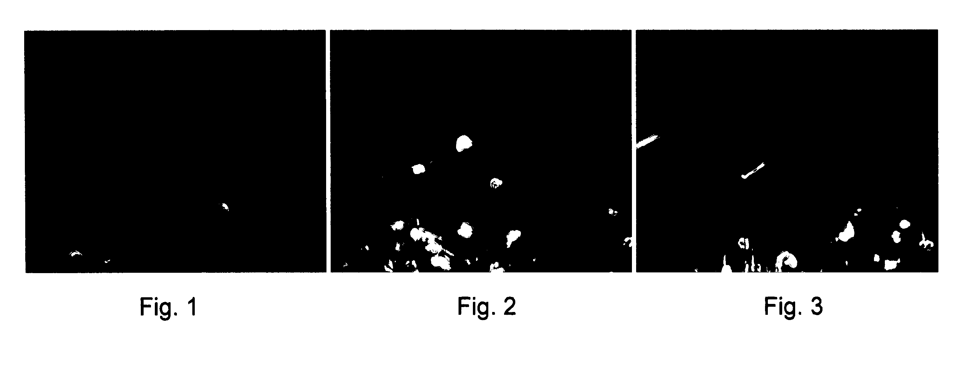

Figures 1-3 show the result of a test with pelleted Onion seeds. The pellet was provided with 0 (blanc), 0.5 and 2 mg Vitamin B phosphate per seed. The dye was simply mixed with the pelleting material. Next, the pelleted seeds were put into a standard mineral substrate growing medium, and they were provided with normal amounts of water to which standard nutrition solutions were added. The difference between the plantlets originating from the differently treated seeds is clearly visible from pictures taken with a blue excitation source (470-490 nm) which illuminated the plantlets, and detection of the emitted fluorescence was allowed with a camera in the green part of the visible spectrum (520-550 nm). In the left photograph (Figure 1) taken from plantlets which were not treated, barely any plantlet is visible. The two right hand photographs (Figures 2 and 3) clearly show the effect of adding vitamin B phosphate to the pellet. The small difference in intensity between the fluorescence detected from both plants treated with the fluorescent tracer shows that the dye uptake by the plant was probably saturated en that lower doses are possible.

### Rhodamine B in beet plants

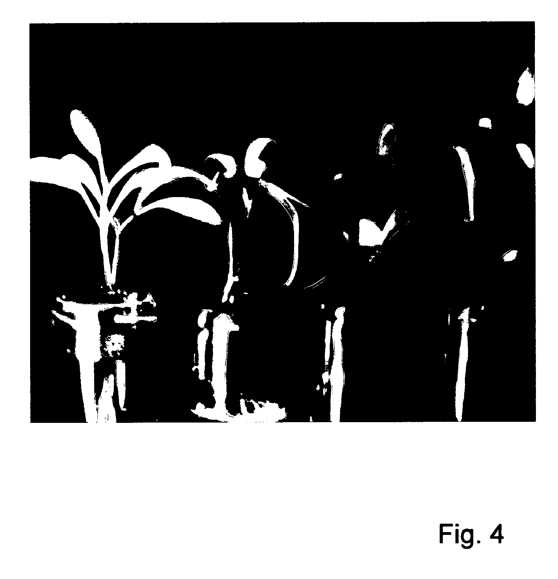

The photograph shown in Figure 4 shows the effect of growing seeds in a growing medium that is provided with different Rhodamine B concentrations. This experiment was done by taking plantlets that were not treated and putting them in a growing solution provided with Rhodamine B to show the uptake of the dye through the roots of the plant. From left to right the Rhodamine B concentrations were 0.01, 0.001, 0.0001, mg/ml water, whereas the right hand plantlet was in a medium without dye (i.e. a blanco experiment). Pictures of the fluorescence from the dye in the plants were taken by illuminating them with green light of a wavelength between 530 nm and 560 nm. The fluorescence was detected with a camera provided with a long pass filter, passing all wavelengths longer than 580 nm. There is a clearly visible difference between the plants growing in the medium which were provided with two highest concentrations when compared with the the low concentration and the blanco experiment. The yellowish fluorescence is brightest in the left plantlet and is the least in the two plantlets on the right hand side

From the above experiments it will be clear that the present invention provides a very attractive process for providing a plant with a label that clearly allows the plant to be identified amongst other plants.

## Claims

1. A process for providing a plant with an identification label, which process comprises cultivating the plant from seed which comprises tracer molecules, thereby allowing the tracer molecules to be incorporated in the plant, whereby the incorporated tracer molecules generate and/or form the identification label.

2. The process according to claim 1, wherein the tracer molecules are fluorescent tracer molecules.

3. The process according to claim 2, wherein the tracer molecules are selected from the group consisting of vitamins, food grade dyes, laser dyes, textile dyes and pH indicators.

4. The process according to claim 3, wherein the tracer molecules are selected from the group consisting of vitamins and food grade dyes.

5. The process according to claim 3 or 4, wherein the tracer molecules are non-toxic and non-phytotoxic.

6. The process according to any one of claims 1-5, wherein the seed which comprises the tracer molecules is obtained by applying the tracer molecules onto the surface of seed particles.

7. The process according to claim 6, wherein a coating or pellet is applied on the seed particles which coating or pellet comprises the tracer molecules.

8. The process according to claim 7, wherein the coating is formed by spray-drying a solution which comprises the tracer molecules on the surface of the seed particles or the coating is formed by impregnating the seed particles with a solution which comprises the tracer molecules.

9. The process according to claim 8, wherein the coating is formed by spray-drying a solution which comprises the tracer molecules on the surface of the seed particles.

10. Seed for cultivating plants which seed comprises tracer molecules.

11. A process or seed according to any one of claims 1-10, wherein the plant is selected from plant species that are individually planted in field applications.

12. A process for preparing seed as defined in claim 10 comprising spray-drying a solution comprising tracer molecules on the surface of seed particles or impregnating seed particles with a solution comprising tracer molecules.

13. Use of tracer molecules for identifying a particular plant among one or more other type of plants, whereby the tracer molecules, present in the plant, originate from the seed of the particular plant.
